# FASCICULE DE BREVET EUROPEEN

(11) **EP 4 248 793 B1**
(45) Date de publication et mention de la délivrance du brevet: **29.04.2026**
(21) Numéro de dépôt: 23162218.4
(22) Date de dépôt: 16.03.2023
(51) Int. Cl.: A46B 9/02, A46B 3/04, B33Y 80/00, A46B 7/10

(54) **APPLICATEUR POUR PRODUIT COSMÉTIQUE COMPORTANT UNE PARTIE MOBILE COMPRENANT UN AXE LONGITUDINAL**
APPLIKATOR FÜR EIN KOSMETIKPRODUKT MIT EINEM BEWEGLICHEN TEIL MIT EINER LÄNGSACHSE
APPLICATOR FOR A COSMETIC PRODUCT COMPRISING A MOBILE PART COMPRISING A LONGITUDINAL AXIS

(30) Priorité: 21.03.2022 FR 2202463
(43) Date de publication de la demande: 27.09.2023
(73) Titulaire: Chanel Parfums Beauté, 92200 Neuilly-sur-Seine (FR)
(72) Inventeur: CASTEX, Nicolas, 92521 Neuilly sur Seine (FR); LAMOUREUX, Marie, 92521 Neuilly sur Seine (FR); CHAPELAT, Carole, 2500 Biel/Bienne 7 (CH); BONADEI, Antoine, 2500 Biel/Bienne 7 (CH)
(74) Mandataire: Santarelli

(56) Documents cités:
- WO-A1-2017/013358
- WO-A1-2018/115770
- WO-A1-2021/058211
- US-A1- 2012 167 910

## Description

La présente invention concerne le domaine des applicateurs pour produit cosmétique. Elle concerne en particulier un applicateur adapté à l'application d'un produit cosmétique tel qu'un mascara sur des poils tels que les cils et les sourcils. Un tel applicateur pour produit cosmétique est désigné par l'expression « applicateur à mascara » ou simplement « applicateur » dans le présent document.

Un tel applicateur est généralement un élément constitutif d'un article de mascara. Un article de mascara comprend classiquement un étui, un réservoir de mascara et un pinceau applicateur. Le pinceau applicateur comporte une partie de préhension et un applicateur à proprement parler, qui se présente généralement sous la forme d'une brosse.

Le pinceau applicateur peut comporter ou former de manière connue, un capuchon ou bouchon adapté à obturer le réservoir en dehors des applications de mascara. Ce capuchon peut former la partie de préhension du pinceau applicateur.

Il existe classiquement plusieurs types d'applicateurs : ceux de type « goupillon », ceux injectés et ceux fabriqués par fabrication additive (parfois appelée « synthèse additive » ou « impression 3D »). La fabrication additive désigne les procédés de fabrication par ajout ou agrégation de matière.

Un applicateur de type goupillon comporte une brosse qui comprend des poils formés par des fibres emprisonnées dans un fil métallique torsadé formant l'âme de l'applicateur. Un applicateur injecté est généralement formé d'une seule pièce et comporte des poils ou des dents, en matière plastique par exemple, généralement appelés protubérances. Un applicateur obtenu par fabrication additive est lui aussi généralement d'une seule pièce et peut être formé par exemple à partir d'une poudre de polymères thermoplastiques via un procédé mettant par exemple en œuvre la fusion de poudre par laser.

Quelle que soit la forme et le mode de réalisation d'un applicateur à mascara connu, le principe d'application du produit consiste à charger l'applicateur en produit cosmétique (en mascara) contenu dans le réservoir, à extraire dudit réservoir l'applicateur dont les protubérances sont chargées en produit, et à réaliser l'application sur les cils ou les sourcils de l'utilisateur ou l'utilisatrice.

Par simplicité on utilise simplement le terme utilisatrice dans le reste du présent document, sans exclure que l'article et/ou l'applicateur soit utilisé par un utilisateur. Par simplicité, on évoque également dans la suite du présent document uniquement les cils, sans toutefois exclure une utilisation du produit et de l'applicateur aux sourcils de l'utilisatrice.

Les brosses connues, qu'elles soient de type goupillon, en matière plastique injectée, ou obtenues par synthèse additive, sont susceptibles de donner de bons résultats de maquillage. Cependant, on est toujours à la recherche d'améliorations du résultat de l'application du produit et du confort d'utilisation pour l'utilisatrice. Il est ainsi souhaitable de concevoir des applicateurs ayant une bonne capacité de rétention de produit cosmétique, qui entraînent une bonne séparation des cils, un bon effet allongeant et/ou recourbant des cils. De même, il est recherché de configurer l'applicateur pour offrir la meilleure qualité d'application possible, notamment la meilleure régularité, avec une gestuelle simple.

Par exemple, le document FR3060956 divulgue un applicateur de produit cosmétique pour les cils, qui comprend une âme présentant une cavité et des orifices latéraux disposés en quinconce qui mettent en communication la cavité avec l'extérieur de l'âme. Des protubérances sont portées par l'âme de l'applicateur. Cet applicateur peut être obtenu par un procédé de synthèse additive. Si cet applicateur a d'excellentes performances pour l'application d'un mascara, et présente une capacité de rétention du mascara optimale, il peut être ressenti par l'utilisatrice comme étant assez rigide.

Le document WO2021/058210 porte sur un applicateur pour produit cosmétique qui comporte une âme longitudinale et un élément mobile, typiquement sous la forme d'une ogive coiffant l'âme longitudinale et qui est liée l'âme à son extrémité de sorte à présenter un certain débattement en rotation autour de l'âme. Ce débattement donne une certaine sensation de souplesse, il n'améliore pas la qualité de l'application du produit cosmétique.

Le document WO2021/058211 présente un applicateur pour produit cosmétique comprenant une âme longitudinale formant des cavités dans lesquelles sont incluses des pièces mobiles qui portent des protubérances. Un tel applicateur améliore l'application du produit sur les cils. Néanmoins, cet applicateur ne permet pas l'obtention d'un résultat similaire à celui obtenu par un maquilleur professionnel, qui peigne les cils non seulement dans leur direction d'implantation mais également selon de légers mouvements de va et vient transversaux, dits en « zigzag ». La présence de petits blocs mobiles crée des zones où toutes les protubérances de la zone considérée sont mobiles ensemble de sorte qu'il n'y a pas d'adaptation de la distance entre les protubérances dans ces zones. En outre, il n'y a aucune cohérence dans le mouvement des différentes parties mobiles : les parties mobiles ne sont pas asservies entre elles, de sorte que leur mouvement n'est pas synchronisé. Il peut en résulter une application imparfaite, avec notamment la formation de paquets de produit cosmétique. En outre, cet applicateur est particulièrement complexe à réaliser et, du fait de sa configuration, les cavités qu'il comporte sont susceptibles d'être rapidement encrassées par le produit cosmétique, de sorte que l'applicateur perd rapidement les avantages de la présence d'éléments mobiles. En outre, l'applicateur proposé dans ce document a une géométrie qui le rend rigide et perçu comme tel lors de l'application du produit.

Le document US2012167910 divulgue un applicateur cosmétique doté d'applicateurs situés à l'intérieur, pouvant sortir de manière coulissante.

La présente invention vise ainsi à proposer un applicateur de produit cosmétique, notamment un applicateur à mascara, qui améliore les applicateurs existants sur au moins l'un des aspects énoncés ci-dessus.

L'invention porte ainsi sur un applicateur pour produit cosmétique, tel que défini dans la revendication 1, comportant un partie fixe, destinée à être rigidement liée à une partie de préhension ou formée de manière monobloc avec ladite partie de préhension, la partie fixe ayant une forme allongée selon un axe longitudinal qui définit une direction longitudinale, la partie fixe étant creuse, de sorte qu'elle comporte une cavité allongée, et la partie fixe comportant des orifices répartis régulièrement sur tout ou partie fixe selon la direction longitudinale et qui mettent en communication la cavité et une zone extérieure à ladite partie fixe. L'applicateur comporte une partie mobile vis-à-vis de la partie fixe, la partie mobile comportant un noyau central allongé dans la direction longitudinale et disposé dans la cavité formée par la partie fixe, la partie mobile comportant des protubérances, chaque protubérance traversant un orifice de la partie fixe de sorte qu'elle fait saillie à l'extérieur de ladite partie fixe. Chaque protubérance s'étend depuis le noyau central de la partie mobile selon une orientation sensiblement perpendiculaire à l'axe longitudinal. La configuration des protubérances, des orifices et de la partie mobile permet un mouvement au moins longitudinal de la partie mobile vis-à-vis de la partie fixe.

La liberté de mouvement de la partie mobile rend l'application du produit cosmétique plus agréable. En effet, même si l'applicateur est formé de matériaux plastiques relativement durs, ce qui est notamment le cas s'il est formé par fabrication additive, la mobilité d'une partie de l'applicateur permet aux protubérances qu'elle porte de pénétrer en douceur dans la frange des cils, en s'adaptant en partie à la position des cils de l'utilisatrice.

Le mouvement longitudinal de la partie mobile permet d'obtenir l'effet d'un maquillage analogue à celui réalisé par un professionnel, qui peigne les cils non seulement dans leur direction d'implantation mais également selon de légers mouvements de va et vient transversaux. Cela améliore, pour un mascara, ses effets recourbant, allongeant, et générateur de volume.

Lorsque la partie fixe porte elle aussi des protubérances, il a été constaté que l'application du produit cosmétique, en particulier d'un mascara, avec un applicateur conforme à la présente invention était, dans certaines configurations de l'invention, réalisée en deux temps. D'abord, les interstices entre les protubérances, chargés de produits, se déchargent au contact des cils. Cela libère la partie mobile (dont le mouvement est initialement limité par le produit que porte l'applicateur), ce qui permet de peigner les cils plus efficacement qu'un applicateur de configuration analogue sans partie mobile portant des protubérances.

La configuration de la partie mobile, sous la forme d'un élément disposé longitudinalement dans la cavité permet un mouvement longitudinal cohérent des protubérances liées à la partie mobile de l'applicateur. L'adaptation de la position des protubérances dans la direction longitudinale de l'applicateur, qui est sensiblement transversale à la direction d'application lors de l'utilisation de l'applicateur, est ainsi optimisée.

Selon le mouvement de l'utilisatrice lors de l'application, l'adaptation de la position des protubérances sera différente, l'applicateur proposé selon la présente invention permettant ainsi potentiellement de produire les effets de différentes brosses.

Des orifices peuvent être formés régulièrement sur tout ou partie de la partie fixe dans sa direction longitudinale. Par régulièrement, on désigne de manière générale une dispositif selon un motif régulier, par exemple selon un espacement longitudinal régulier. Les orifices peuvent être disposés en quinconce.

Ces configurations permettent de former un applicateur comportant des protubérances mobiles sur toute sa longueur. La disposition en quinconce des orifices permet d'augmenter le nombre de protubérances mobiles en contact avec les cils lors d'une application de produit cosmétique. Elle permet d'améliorer la séparation des cils et la capacité de l'applicateur à les peigner.

La partie fixe peut porter des protubérances.

Le nombre de protubérances de l'applicateur peut ainsi être augmenté. Cela augmente le nombre d'interstices disponibles pour le produit cosmétique et permet donc la rétention d'un produit plus fluide. Cela augmente aussi la régularité de l'application.

La présence de protubérances fixes alternant en position avec des protubérances mobiles permet également de faire varier localement la densité de protubérance, ce qui, selon le mouvement de l'utilisatrice lors de l'application, permet de moduler le résultat de cette application.

La cavité peut comporter une extrémité distale opposée à la partie de préhension, l'extrémité distale étant ouverte.

Une cavité ouverte à son extrémité présente plusieurs avantages. Lors de la fabrication de l'applicateur, en particulier par synthèse additive sur lit de poudre, l'extrémité ouverte permet un dépoudrage aisé et efficace de l'applicateur. Lors de l'utilisation, l'extrémité ouverte peut, pour des situations extrêmes dans lesquelles du produit cosmétique aurait séché dans la cavité, faciliter un décolmatage de l'applicateur.

La partie mobile peut être libre en rotation, sur un certain débattement, selon l'axe longitudinal. La partie mobile peut être disposée librement dans la cavité, de sorte être mobilisée selon au moins certaines directions transversales.

L'applicateur peut comporter une liaison glissière ou une liaison pivot glissant entre la partie mobile et la partie fixe

Une mobilité de la partie mobile non seulement dans la direction longitudinale mais également dans d'autres directions augmente la sensation de souplesse de l'applicateur, le rendant d'autant plus agréable pour l'utilisatrice lors de l'application d'un produit cosmétique. Cette souplesse apportée par une configuration géométrique particulière peut par exemple permettre de compenser la rigidité intrinsèque du matériau utilisé pour former l'applicateur.

L'applicateur peut comporter un élément de jonction destiné à être lié à une partie de préhension, ledit élément de jonction comportant un passage longitudinal débouchant dans la cavité, une portion de la partie mobile dépassant de la partie fixe par ledit passage.

L'applicateur peut comporter en outre un moyen d'excitation mécanique lié à ladite partie mobile par sa portion dépassant de la partie fixe par ledit passage.

Le passage formé dans la partie fixe de l'applicateur peut ainsi servir de guide à la partie mobile. Dans certains modes de réalisation la portion de la partie mobile qui dépasse de la partie fixe permet d'appliquer une action mécanique sur la partie mobile. Cette action mécanique peut par exemple être une excitation mécanique (mouvement de va et vient, ou vibration) créant ainsi un applicateur de produit cosmétique actif. Un tel applicateur peut avoir une régularité et/ou une finesse d'application très importante.

La portion de la partie mobile sortant de la partie fixe peut aussi être employée pour appliquer une précontrainte à la partie mobile (par exemple via un système élastique tel qu'un ressort) et/ou un moyen permettant d'amortir le mouvement de la partie mobile.

Chaque protubérance de l'applicateur peut être sensiblement cylindrique ou prismatique et a une longueur comprise entre 0,2 mm et 0,5mm par exemple entre 0,24 mm et 0,40 mm.

Les protubérances de chacune des parties de l'applicateur peuvent ainsi avoir des effets distincts sur l'application du produit cosmétique. Par exemple, une alternance de protubérances longues et de protubérances courtes peut augmenter la capacité de rétention de produit de l'applicateur, et augmenter sa capacité à séparer les cils lors de l'application du produit. Des protubérances longues ont une meilleure capacité à peigner les cils. La forme générale des protubérances permet de moduler leurs propriétés. Par exemple, les protubérances peuvent avoir une forme allongée de section fixe (elles sont alors prismatiques ou cylindriques) ou variable.

Chaque protubérance peut comporter une extrémité libre opposée à l'axe longitudinal, l'applicateur s'inscrivant dans une enveloppe extérieure définie par les extrémités libres des protubérances, ladite enveloppe étant sensiblement cylindrique et d'un diamètre compris entre 6 mm et 10 mm, par exemple entre 7 mm et 9 mm, tel que 8 mm.

Une telle enveloppe géométrique extérieure de l'applicateur le rend efficace pour l'application du produit cosmétique et agréable à utiliser.

La partie fixe de l'applicateur peut être réalisée en polyamide, par exemple en polyamide 11, ou en polypropylène. La partie mobile de l'applicateur peut être réalisée en polyamide, par exemple en polyamide 11, ou en polypropylène.

L'applicateur peut ainsi être constitué d'un seul matériau ou de deux matériaux distincts. Les matériaux plastiques adaptés à être utilisés dans un procédé de fabrication additive de l'applicateur sont préférés. En effet l'applicateur est avantageusement réalisé selon un procédé de fabrication additive (ou « impression 3D »), qui permet l'obtention des formes complexes liées à la mobilité de la partie mobile, en particulier les formes en boucles ouvertes qu'elle comporte.

L'invention porte également sur un procédé de fabrication d'un applicateur tel que défini dans la revendication 14, ledit procédé comportant une étape de fusion sur lit de poudre d'un matériau plastique.

D'autres particularités et avantages de l'invention apparaîtront encore dans la description ci-après.

Aux dessins annexés, donnés à titre d'exemples non limitatifs :
la figure 1 représente, selon une vue schématique en trois dimensions, un applicateur conforme à un mode de réalisation de l'invention ;
la figure 2 représente, selon un schéma de principe, un exemple de répartition de protubérances pouvant être obtenu avec un applicateur de produit cosmétique conforme au mode de réalisation de la figure 1.

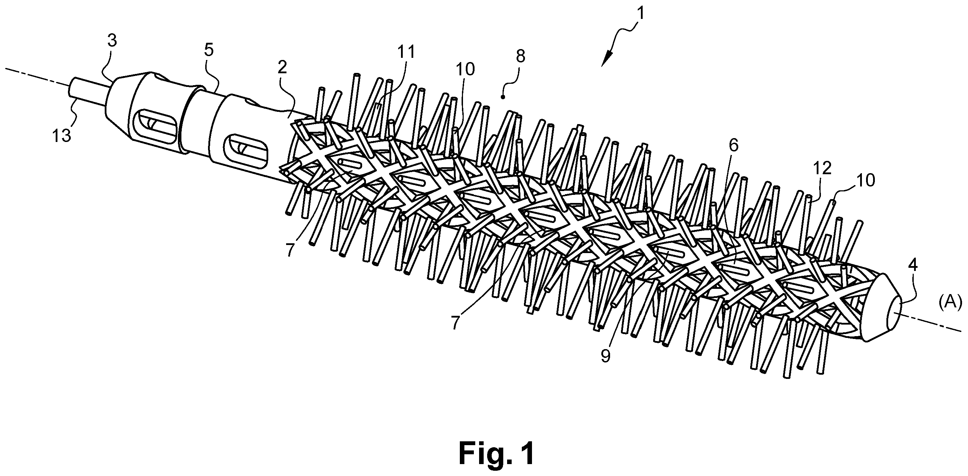

L'applicateur de la figure 1 est de forme allongée, et s'étend le long d'un axe longitudinal A qui forme l'axe principal de l'applicateur.

L'applicateur 1 de la figure 1 comporte une partie fixe 2 qui s'étend longitudinalement et est ainsi formée entre une première extrémité 3 destinée à être liée à une partie de préhension afin de former un pinceau applicateur et une deuxième extrémité, dite extrémité distale 4, qui est libre.

En particulier, la première extrémité 3 est formée au bout d'un élément de jonction 5 destiné à être lié à une partie de préhension. Selon certains modes de réalisation de l'invention non représentés, la partie de préhension peut être formée de manière monobloc avec l'applicateur à proprement parler.

La partie fixe de l'applicateur 1 de la figure 1 est creuse, c'est-à-dire qu'elle forme une cavité 6 allongée, selon la direction longitudinale de l'axe longitudinal A.

La partie fixe a donc de préférence, sur au moins une majorité de sa longueur (dimension dans la direction longitudinale) une forme cylindrique ou prismatique droite. Dans l'exemple représenté, la partie fixe a une forme générale cylindrique.

La forme générale de la partie fixe de l'applicateur est définie par une paroi largement ajourée, qui comporte de nombreux orifices 7. Les orifices 7 traversent la paroi de la partie fixe. Les orifices 7 mettent ainsi en communication la cavité 6 et l'extérieur de l'applicateur, c'est-à-dire une zone extérieure 8 vis-à-vis de la partie fixe.

Dans l'exemple représenté, les orifices 7 ont une forme générale en losange, et sont orientés de sorte à avoir leur diagonale la plus longue orientée dans la direction longitudinale. Cette forme en losange maximise la dimension des orifices dans la direction longitudinale. D'autres formes d'orifice, notamment allongées dans la direction longitudinale, sont envisageables.

Les orifices 7 sont positionnés en quinconce.

Du fait de la configuration des orifices 7, la surface ouverte de la paroi de la partie fixe (sur la longueur de la partie fixe qui comporte des orifices) représente plus de la moitié de la surface de cette paroi.

L'applicateur 1 comporte en outre une partie mobile 9.

La partie mobile 9 est disposée dans la cavité 6 de la partie fixe 2.

La partie mobile 9 comporte un noyau central qui se présente dans l'exemple de mode de réalisation de la figure 1 sous la forme d'un axe longitudinal.

La partie mobile comporte en outre des protubérances 10. Chaque protubérance 10 de la partie mobile 9 traverse un orifice 7 de la partie fixe 2. Ainsi, chaque protubérance 10 s'étend depuis le noyau central selon une orientation sensiblement perpendiculaire à l'axe longitudinal A, et de préférence une orientation radiale, c'est-à-dire selon une direction perpendiculaire et sécante vis-à-vis de l'axe longitudinal A.

Alternativement, les protubérances peuvent avoir des angles d'implantation différents, par exemple pour accompagner le mouvement d'application et/ou pour favoriser la rétention de produit cosmétique.

Dans un mode de réalisation, il y a autant d'orifices que de protubérances. Dans ce mode de réalisation, chaque protubérance s'étend à travers un orifice différent. Dans d'autres modes de réalisation, plusieurs protubérances traversent un même orifice. En tout état de cause, chaque orifice présente une dimension longitudinale supérieure à celle de la protubérance ou des protubérances qui le traversent (dimension longitudinale hors tout d'une protubérance ou des protubérances qui traversent un orifice) afin de permettre le mouvement longitudinal desdites protubérances de la partie mobile.

Les bords des orifices limitent ainsi le mouvement longitudinal des protubérances, lorsqu'une protubérance vient en appuis sur l'un de ces bords.

La partie mobile étant montée librement dans la cavité 6, son déplacement est libre au moins dans la direction longitudinale. Dans l'exemple représenté, la partie mobile 9 peut également pivoter selon l'axe longitudinal 1. Le débattement du mouvement longitudinal de la partie mobile 9 est néanmoins limité par les interférences mécaniques entre les protubérances 10 et les bords des orifices qu'elles traversent respectivement. Les dimensions et la forme des orifices 7, ainsi que la section transversale des protubérances 10, permet ainsi de déterminer le débattement de la partie mobile dans ses différents degrés de liberté.

Dans l'exemple représenté, la partie mobile se prolonge dans un passage longitudinal formé dans l'élément de jonction 5 de la partie fixe. Le passage est cylindrique et son diamètre correspond, à un jeu fonctionnel près, à celui de l'axe formant le noyau central de la partie mobile. Ce passage débouche donc d'une part dans la cavité de la partie fixe, et d'autre part au niveau de la première extrémité 3 de la partie fixe. La partie mobile peut ainsi coulisser librement dans le passage, et y pivoter (car elle est cylindrique dans cet exemple) autour de l'axe longitudinal A. On parle alors de liaison pivot glissant. La coopération entre le passage et la partie mobile permet donc un guidage en translation de ladite partie mobile. D'autres moyens pour former une glissière ou un pivot glissant entre la partie fixe et la partie mobile de l'applicateur 1 peuvent bien évidemment être envisagés.

Selon l'exemple de mode de réalisation représenté, la partie fixe comporte également des protubérances 10.

Les protubérances 10 peuvent avoir des géométries diverses. Les protubérances 10 assurent plusieurs fonctions, notamment une fonction de rétention du produit cosmétique, une fonction d'application sur les cils de ce produit, une fonction de séparation des cils, une fonction de peignage. La configuration des protubérances est optimisée pour qu'elles remplissent conjointement ces fonctions. Toutes les protubérances peuvent ainsi avoir la même configuration, ou des configurations différentes. Dans l'exemple ici représenté, les protubérances sont cylindriques droites, de faible diamètre. Elles sont assimilables à des poils rigides. Des protubérances prismatiques ayant une section carrée, rectangulaire, ovale, etc. sont bien évidemment envisageables. De même, des protubérances coniques, tronconiques, pyramidales, ou toute autre section évolutive, peuvent être envisagées.

Un premier groupe de protubérances 11 est porté par les chaînes de la partie mobile. Un second groupe de protubérances 12 est porté par les maillons de la partie fixe.

La forme et la disposition des orifices 7 peut également être optimisée pour favoriser la rétention du produit cosmétique.

Les protubérances de ces deux groupes ont des sections transversales identiques, mais des longueurs différentes, de sorte à ce que leur extrémité libre soit sensiblement à une même distance de l'axe longitudinal A (à l'exception éventuelle des protubérances les plus proches des extrémités de l'applicateur qui peuvent être plus courtes), afin d'inscrire l'applicateur dans une enveloppe générale extérieure sensiblement cylindrique. L'applicateur peut ainsi être inscrit dans un cylindre ayant un diamètre compris entre 6 mm et 10 mm. Des applicateurs inscrits dans une enveloppe extérieure de 7 mm à 9,5 mm sont également envisageables. Une valeur optimale, en termes d'efficacité et de confort d'application, est de 8 mm ou d'environ 8 mm.

Selon les divers modes de réalisation de l'invention et les diverses configurations de protubérances pouvant être utilisées, la longueur des protubérances (dimension mesurée selon leur direction d'extension principale, typiquement radialement par rapport à l'axe longitudinal A) peut être comprise entre 0,2 mm et 0,5mm par exemple entre 0,24 mm et 0,40 mm.

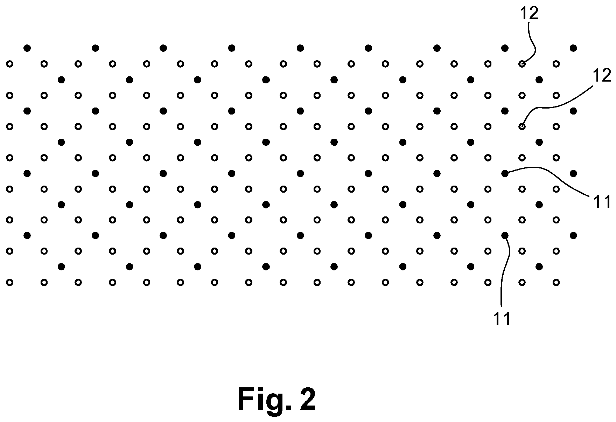

La figure 2 représente, selon un schéma de principe, la répartition des protubérances fixes de l'applicateur de la figure 1. Sur la figure 2, l'enveloppe extérieure dans laquelle s'inscrit l'applicateur a été développée, à plat. Les protubérances fixes sont représentées par des cercles (non-remplis) tandis que les protubérances mobiles ont été représentées par des cercles pleins. Dans l'exemple d'implantation représenté, on a ainsi créé, dans le sens de balayage de l'applicateur, une succession d'alignements de protubérances fixes et d'alignements de protubérances mobiles. Les cils sont ainsi successivement peignés par des protubérances fixes, qui séparent les cils, et des protubérances mobiles qui en s'adaptant aux cils et aux mouvements de l'utilisatrice confèrent un effet de peignage latéral (dans la direction longitudinale de l'applicateur) qui améliore l'application du produit cosmétique (par exemple améliore l'allongement des cils ou leur volume).

Afin d'améliorer la qualité de l'application et/ou son confort, ou pour modifier le résultat de cette application, l'applicateur peut être associé à un moyen permettant d'appliquer une action mécanique particulière à la partie mobile. Dans l'exemple représenté, une portion 13 de la partie mobile 9 dépasse du passage formé dans la partie fixe 2.

Cette portion 13 peut être utilisée pour y fixer ledit moyen pour appliquer une action mécanique. Par exemple, un dispositif comportant un moteur électrique peut être lié à la partie mobile pour lui imposer un mouvement de va et vient et/ou une vibration. Alternativement, un dispositif de rappel tel qu'un ressort peut imposer une position de repos prédéterminée à la partie mobile 9 et donc aux protubérances qu'elle porte. L'applicateur retrouve ainsi, entre chaque application, une position optimale pour se charger en produit cosmétique et pour permettre une séparation efficace des cils.

Du fait de sa configuration complexe, l'applicateur décrit ci-dessus est avantageusement (voire nécessairement pour certains modes de réalisation) fabriqué par une technique de fabrication additive. Il en va des autres modes de réalisation de l'invention. La fabrication additive par fusion sur lit de poudre est la technique préférée pour former un applicateur selon la présente invention.

L'applicateur est avantageusement formé en matériau plastique. Dans certains modes de réalisation, l'applicateur est formé en un seul matériau. Dans d'autres modes de réalisation, la partie fixe et la partie mobile sont réalisées en deux matériaux différents. Un polyamide, de préférence un polyamide aliphatique, par exemple du polyamide 11, peut être utilisé pour former la partie fixe et/ou la partie mobile. Du polypropylène peut être utilisé pour former la partie fixe et/ou la partie mobile.

L'invention ainsi développée propose un applicateur pour produit cosmétique, en particulier un applicateur de mascara, permettant une application de grande qualité avec une gestuelle simple. Le confort d'utilisation, notamment la sensation de souplesse de l'applicateur est conservée malgré l'utilisation possible d'un matériau dur, par exemple d'un plastique rigide compatible d'un procédé de fabrication additive.

## Revendications

1. Applicateur pour produit cosmétique comportant une partie fixe (2), destinée à être rigidement liée à une partie de préhension ou formée de manière monobloc avec ladite partie de préhension,
la partie fixe (2) ayant une forme allongée selon un axe longitudinal (A) définissant une direction longitudinale,
la partie fixe (2) étant creuse, de sorte qu'elle comporte une cavité (6) allongée,
dans lequel l'applicateur (1) comporte une partie mobile (9) vis-à-vis de la partie fixe, la partie mobile (9) comportant un noyau central allongé dans la direction longitudinale et disposé dans la cavité (6) formée par la partie fixe (2),
la partie mobile (9) comportant des protubérances (10),
dans lequel
la partie fixe comporte des orifices (7) répartis régulièrement sur tout ou partie de la partie fixe selon sa direction longitudinale et qui mettent en communication la cavité (6) et une zone extérieure (8) à ladite partie fixe (2),
chaque protubérance (10) traversant un orifice (7) de la partie fixe (2) de sorte qu'elle fait saillie à l'extérieur de ladite partie fixe (2),
**caractérisé en ce que**
chaque protubérance (10) s'étend depuis le noyau central de la partie mobile (9) selon une orientation sensiblement perpendiculaire à l'axe longitudinal (A),
la configuration des protubérances (10), des orifices (7) et de la partie mobile permettant un mouvement au moins longitudinal de la partie mobile (9) et des protubérances vis-à-vis de la partie fixe (2).

2. Applicateur selon la revendication 1, dans lequel les orifices (7) sont disposés en quinconce.

3. Applicateur selon l'une des revendications précédentes, dans lequel la partie fixe (2) porte des protubérances (10).

4. Applicateur selon l'une des revendications précédentes, dans lequel la cavité (6) comporte une extrémité distale (4) opposée à la partie de préhension, l'extrémité distale (4) étant ouverte.

5. Applicateur selon l'une des revendications précédentes dans lequel la partie mobile (9) est libre en rotation, sur un certain débattement, autour de l'axe longitudinal.

6. Applicateur selon l'une des revendications précédentes dans lequel la partie mobile (9) est disposée librement dans la cavité (6), de sorte à être mobilisée selon au moins certaines directions transversales.

7. Applicateur selon l'une des revendications 1 à 5 comportant une liaison glissière ou une liaison pivot glissant entre la partie mobile (9) et la partie fixe (2).

8. Applicateur selon l'une des revendications précédentes, comportant un élément de jonction (5) destiné à être lié à une partie de préhension, ledit élément de jonction (5) comportant un passage longitudinal débouchant dans la cavité, une portion (13) de la partie mobile (9) dépassant de la partie fixe (2) par ledit passage.

9. Applicateur selon la revendication 8, comportant en outre un moyen d'excitation mécanique lié à ladite partie mobile par sa portion (13) dépassant de la partie fixe par ledit passage.

10. Applicateur selon l'une des revendications précédentes, dans lequel chaque protubérance (10) est sensiblement cylindrique ou prismatique et a une longueur comprise entre 0,2 mm et 0,5 mm par exemple entre 0,24 mm et 0,40 mm.

11. Applicateur selon l'une des revendications précédentes, dans lequel chaque protubérance (10) comporte une extrémité libre opposée à l'axe longitudinal (A), ledit applicateur (1) s'inscrivant dans une enveloppe extérieure définie par les extrémités libres des protubérances (10), ladite enveloppe étant sensiblement cylindrique et d'un diamètre compris entre 6 mm et 10 mm, par exemple entre 7 mm et 9 mm, tel que 8 mm.

12. Applicateur selon l'une des revendications précédentes, dans lequel la partie fixe (2) est réalisée en polyamide, par exemple en polyamide 11, ou en polypropylène.

13. Applicateur selon l'une des revendications précédentes, dans lequel la partie mobile (9) est réalisée en polyamide, par exemple en polyamide 11, ou en polypropylène.

14. Procédé de fabrication d'un applicateur selon l'une des revendications précédentes, ledit procédé comportant une étape de fusion sur lit de poudre d'un matériau plastique.

## Patentansprüche

1. Applikator für ein Kosmetikprodukt, der ein feststehendes Teil (2) umfasst, das dazu bestimmt ist, starr mit einem Greifteil verbunden zu werden, oder einstückig mit dem Greifteil gebildet ist,
wobei das feststehende Teil (2) eine langgestreckte Form entlang einer Längsachse (A), die eine Längsrichtung definiert, aufweist,
wobei das feststehende Teil (2) hohl ist, so dass es eine langgestreckte Kavität (6) umfasst,
wobei der Applikator (1) ein in Bezug auf das feststehende Teil bewegliches Teil (9) umfasst, wobei das bewegliche Teil (9) einen zentralen Kern umfasst, der in Längsrichtung langgestreckt ist und in der durch das feststehende Teil (2) gebildeten Kavität (6) angeordnet ist,
wobei das bewegliche Teil (9) Vorsprünge (10) umfasst,
wobei
das feststehende Teil Öffnungen (7) umfasst, die regelmäßig in Längsrichtung über das gesamte oder einen Teil des feststehenden Teils verteilt sind und die die Kavität (6) und einen Bereich (8) außerhalb des feststehenden Teils (2) in Verbindung bringen,
wobei jeder Vorsprung (10) eine Öffnung (7) des feststehenden Teils (2) durchdringt, so dass er aus dem feststehenden Teil (2) herausragt,
**dadurch gekennzeichnet, dass**
jeder Vorsprung (10) sich von dem zentralen Kern des beweglichen Teils (9) aus entlang einer im Wesentlichen senkrecht zu der Längsachse (A) verlaufenden Ausrichtung erstreckt,
wobei die Ausgestaltung der Vorsprünge (10), der Öffnungen (7) und des beweglichen Teils mindestens eine Längsbewegung des beweglichen Teils (9) und der Vorsprünge in Bezug auf das feststehende Teil (2) ermöglichen.

2. Applikator nach Anspruch 1, wobei die Öffnungen (7) versetzt angeordnet sind.

3. Applikator nach einem der vorhergehenden Ansprüche, wobei das feststehende Teil (2) Vorsprünge (10) trägt.

4. Applikator nach einem der vorhergehenden Ansprüche, wobei die Kavität (6) ein distales Ende (4) umfasst, das zu dem Greifteil entgegengesetzt ist, wobei das distale Ende (4) offen ist.

5. Applikator nach einem der vorhergehenden Ansprüche, wobei das bewegliche Teil (9) über eine bestimmte Auslenkung um die Längsachse herum drehbeweglich ist.

6. Applikator nach einem der vorhergehenden Ansprüche, wobei das bewegliche Teil (9) in der Kavität (6) frei angeordnet ist, so dass es mindestens entlang von bestimmten Querrichtungen mobilisiert werden kann.

7. Applikator nach einem der Ansprüche 1 bis 5, umfassend eine Gleitverbindung oder eine Gleit-SchwenkVerbindung zwischen dem beweglichen Teil (9) und dem feststehenden Teil (2).

8. Applikator nach einem der vorhergehenden Ansprüche, umfassend ein Verbindungselement (5), das dazu bestimmt ist, mit einem Greifteil verbunden zu werden, wobei das Verbindungselement (5) einen in die Kavität mündenden Längsdurchlass umfasst, wobei ein Abschnitt (13) des beweglichen Teils (9), durch den Durchlass über das feststehende Teil (2) übersteht.

9. Applikator nach Anspruch 8, umfassend ferner ein mechanisches Anregungsmittel, das mit dem beweglichen Teil über seinen Abschnitt (13), der durch den Durchlass über das feststehende Teil übersteht, verbunden ist.

10. Applikator nach einem der vorhergehenden Ansprüche, wobei jeder Vorsprung (10) im Wesentlichen zylindrisch oder prismatisch ist und eine Länge zwischen 0,2 mm und 0,5 mm, zum Beispiel zwischen 0,24 mm und 0,40 mm, aufweist.

11. Applikator nach einem der vorhergehenden Ansprüche, wobei jeder Vorsprung (10) ein zu der Längsachse (A) entgegengesetztes freies Ende umfasst, wobei der Applikator (1) in eine äußere Hüllkurve einbeschrieben ist, die durch die freien Enden der Vorsprünge (10) definiert wird, wobei die Hüllkurve im Wesentlichen zylindrisch ist und einen Durchmesser zwischen 6 mm und 10 mm, zum Beispiel zwischen 7 mm und 9 mm, wie etwa 8 mm hat.

12. Applikator nach einem der vorhergehenden Ansprüche, wobei das feststehende Teil (2) aus Polyamid, zum Beispiel aus Polyamid 11, oder aus Polypropylen ausgeführt ist.

13. Applikator nach einem der vorhergehenden Ansprüche, wobei das bewegliche Teil (9) aus Polyamid, zum Beispiel aus Polyamid 11, oder aus Polypropylen ausgeführt ist.

14. Verfahren zur Herstellung eines Applikators nach einem der vorhergehenden Ansprüche, wobei das Verfahren einen Schritt des Pulverbettschmelzens eines Kunststoffmaterials umfasst.

## Claims

1. Cosmetic product applicator comprising a fixed part (2) which is intended to be rigidly connected to a grip part or which is formed in one piece with said grip part, the fixed part (2) having an elongate shape along a longitudinal axis (A) defining a longitudinal direction, the fixed part (2) being hollow, such that it has an elongate cavity (6),
wherein the applicator (1) has a movable part (9) which can move relative to the fixed part, the movable part (9) comprising a central core which is elongate in the longitudinal direction and is arranged in the cavity (6) formed by the fixed part (2),
the movable part (9) comprising projections (10), wherein
the fixed part has orifices (7) which are distributed evenly over all or some of the fixed part in its longitudinal direction and which place the cavity (6) in communication with a zone (8) external to said fixed part (2),
each projection (10) passing through an orifice (7) of the fixed part (2) such that said projection protrudes out of said fixed part (2),
**characterized in that**
each projection (10) extends from the central hub of the movable part (9) in an orientation substantially perpendicular to the longitudinal axis (A),
the configuration of the projections (10), the orifices (7) and the movable part allow at least a longitudinal movement of the movable part (9) and of the projections relative to the fixed part (2).

2. Applicator according to Claim 1, wherein the orifices (7) are staggered.

3. Applicator according to one of the preceding claims, wherein the fixed part (2) carries the projections (10).

4. Applicator according to one of the preceding claims, wherein the cavity (6) has a distal end (4) opposite the grip part, the distal end (4) being open.

5. Applicator according to one of the preceding claims, wherein the movable part (9) is able to rotate freely, through a certain range of movement, about the longitudinal axis.

6. Applicator according to one of the preceding claims, wherein the movable part (9) is arranged freely in the cavity (6), such that said movable part is able to be moved in at least some transverse directions.

7. Applicator according to one of Claims 1 to 5, comprising a slide connection or a sliding pivot connection between the movable part (9) and the fixed part (2).

8. Applicator according to one of the preceding claims, comprising a joining element (5) intended to be connected to a grip part, said joining element (5) having a longitudinal passage emerging into the cavity, a portion (13) of the movable part (9) projecting beyond the fixed part (2) through said passage.

9. Applicator according to Claim 8, further comprising a mechanical excitation means connected to said movable part via that portion (13) of the latter that projects beyond the fixed part through said passage.

10. Applicator according to one of the preceding claims, wherein each projection (10) is substantially cylindrical or prismatic and has a length comprised between 0.2 mm and 0.5 mm, for example between 0.24 mm and 0.40 mm.

11. Applicator according to one of the preceding claims, wherein each projection (10) has a free end away from the longitudinal axis (A), said applicator (1) being inscribed in an outer envelope defined by the free ends of the projections (10), said envelope being substantially cylindrical and having a diameter comprised between 6 mm and 10 mm, for example between 7 mm and 9 mm, such as 8 mm.

12. Applicator according to one of the preceding claims, wherein the fixed part (2) is made of polyamide, for example polyamide 11, or polypropylene.

13. Applicator according to one of the preceding claims, wherein the movable part (9) is made of polyamide, for example polyamide 11, or polypropylene.

14. Method for manufacturing an applicator according to one of the preceding claims, said method comprising a step of powder bed fusion of a plastics material.
